# FASCICULE DE BREVET EUROPEEN

(11) **EP 1 193 625 B1**
(45) Date de publication et mention de la délivrance du brevet: **13.09.2006**
(21) Numéro de dépôt: 00402666.2
(22) Date de dépôt: 27.09.2000
(51) Int. Cl.: G06F 17/30

(54) **Moteur de recherche collaboratif**
Kollaborative Suchmaschine
Collaborative search engine

(43) Date de publication de la demande: 03.04.2002
(73) Titulaire: Pertinence Data Intelligence, 75002 Paris (FR)
(72) Inventeur: Huret, Augustin, 54690 Eulmont (FR)
(74) Mandataire: Abello, Michel

(56) Documents cités:
- US-A- 5 592 375
- US-A- 5 890 152
- US-A- 6 012 051
- SALTON G ET AL: "TERM-WEIGHTING APPROACHES IN AUTOMATIC TEXT RETRIEVAL" INFORMATION PROCESSING & MANAGEMENT,GB,ELSEVIER, BARKING, vol. 24, no. 5, 1988, pages 513-523, XP000716208 ISSN: 0306-4573

## Description

La présente invention concerne un moteur de recherche destiné à extraire d'une base de données une liste de données en réponse à une requête, en particulier pour extraire d'une base de données des données de réponse désignant un produit ou service à fournir par un fournisseur à un client, ainsi qu'un procédé d'assistance par ordinateur (PAO) mettant en oeuvre le moteur de recherche pour faire des offres commerciales personnalisées.

Les bases de données informatiques ont de multiples usages. Par exemple, de manière connue, une entreprise commerciale peut regrouper dans des bases de données informatiques de nombreuses informations concernant ses clients pour utiliser ces informations à des fins mercatiques. Par exemple, la profession, le lieu de résidence, l'âge, les goûts de ses clients peuvent permettre à une entreprise de mieux adapter son offre. Par ailleurs, de manière connue, un réseau de télécommunication permet à différentes branches d'une même entreprise de facilement mettre en commun ces données depuis des sites distants. Dans un tel système, les données collectées sont très diverses et très volumineuses.

Lorsqu'une grande quantité de données sont stockées dans une base, celles-ci doivent ensuite être traitées automatiquement pour en extraire des informations utiles à un but précis, par exemple pour faire à un client, réel ou potentiel, particulier une offre commerciale personnalisée susceptible de rencontrer son intérêt. Un moyen connu de traitement consiste à utiliser un moteur logiciel de recherche de chaînes de caractères. Un tel moteur de recherche est capable d'extraire des enregistrements stockés dans une base de données ceux qui contiennent une chaîne de caractère prédéterminée, par exemple un mot ou groupe de mots.

Un tel moteur de recherche connu a des inconvénients : la recherche d'une chaîne de caractère ne permet pas de spécifier le contexte d'utilisation dudit mot ou groupe de mots, ni son sens, qui peut être multiple, de sorte que les enregistrements extraits par un tel moteur ont un volume croissant et une pertinence décroissant avec le volume de la base de données, ce qui réduit leur utilité.

Le procédé d'assistance par ordinateur pour faire une offre commerciale à l'aide de la base de données décrite ci-dessus a aussi des inconvénients : la collecte, le stockage et le traitement des données ont un coût entièrement à la charge de l'entreprise propriétaire de la base et qui croît avec la quantité de données. De plus, une entreprise donnée ne peut recueillir de données que sur le nombre limité d'acteurs avec lesquels elle entretient des relations dans le cadre de son activité normale, par exemple sur ses propres clients et fournisseurs. Si ces données doivent être achetées à une autre source de données, elles entraînent aussi un surcoût pour l'entreprise.

Par ailleurs, de nombreuses entreprises utilisent des ordinateurs pour faire des transactions et/ou fournir des produits ou des services à des clients par l'intermédiaire de réseaux de télécommunication. L'occupation de la mémoire desdits ordinateurs par une base de données telle que précédemment décrite et la mobilisation de leurs capacités de calcul pour le traitement desdites données présentent des inconvénients tels que la diminution du débit d'informations échangées par lesdits ordinateurs avec lesdits clients, le ralentissement de l'activité et finalement la diminution de la productivité de l'entreprise. Pour échapper à cet inconvénient, l'entreprise doit s'équiper d'ordinateurs aux performances très élevées, ce qui entraîne également un surcoût pour elle.

Le brevet américain US-A-6 012 051 attribué à SAMMON JR THOMAS M El AL et publié le 4 janvier 2000 décrit un système de prise de décision permettant d'identifier au sein d'une base de données des produits ayant des caractéristiques pertinentes pour un utilisateur, en fonction des caractéristiques du profil dudit utilisateur. Toutefois, la sélection d'un produit donné n'est pas basée sur la pondération des attributs d'autres produits de la base et prend par conséquent mal en compte de l'ensemble des données de la base.

Un premier but de la présente invention est de fournir un système comprenant un moteur de recherche ne présentant pas les inconvénients précités.

Pour cela, l'invention a pour premier objet un système comprenant un moteur de recherche tel que défini dans les revendications 1 à 19 ci-dessous. Dans un premier mode de réalisation défini par les revendications 1 à 11, le moteur de recherche comporte un jeu de codes d'instructions exécutables par un terminal informatique d'interrogation pour constituer une requête et un autre jeu de codes d'instructions exécutables par un terminal informatique de recherche pour extraire d'une base de données une liste de données de réponse à ladite requête, le terminal d'interrogation et le terminal de recherche étant reliés par un réseau de télécommunication.

Dans un deuxième mode de réalisation, défini par les revendications 12 et 13, le jeu de codes d'instructions exécutables par le terminal informatique de recherche permet de recevoir et d'exécuter des commandes de mise en relation émises depuis d'autres terminaux informatiques, dit terminaux partenaires, reliés au réseau de télécommunication. Dans ce deuxième mode de réalisation, le terminal de recherche exécute une commande de mise en relation en envoyant à destination du terminal d'interrogation un module logiciel d'interrogation pour constituer une requête dont certaines caractéristiques sont prédéterminées en fonction du terminal partenaire à l'origine de la commande de mise en relation.

Dans un troisième mode de réalisation, défini par les revendications 14 à 18, le terminal de recherche comporte également une base de données-partenaire, contenant de préférence des informations sur des produits et/ou services destinés à être fournis par le terminal partenaire. Le jeu de codes d'instructions exécutables par le terminal informatique de recherche permet de filtrer les données de réponse et de choisir le destinataire de la liste de réponse en fonction des données-partenaire.

Un second but de la présente invention est de fournir un procédé d'assistance par ordinateur ne présentant pas les inconvénients précités.

Pour cela, l'invention a pour second objet un procédé d'assistance par ordinateur tel que défini dans la revendication 20 ci-dessous.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence au dessin annexé. Sur ce dessin :
- la figure 1 est un schéma de fonctionnement du moteur de recherche selon l'invention dont les instructions sont exécutées conjointement par un terminal informatique de recherche et par un terminal informatique d'interrogation reliés par un réseau de télécommunication ;
- la figure 2 est un exemple de contenu d'une base de données avec laquelle le moteur de recherche coopère ;
- la figure 3 est un exemple d'une réponse générée par le moteur de recherche qui coopère avec la base de données de la figure 2 ;
- la figure 4 est un schéma de fonctionnement du moteur de recherche dont les instructions sont exécutées par un terminal informatique de recherche relié par un réseau de télécommunication avec un terminal informatique partenaire ;
- la figure 5 est un schéma de fonctionnement d'une variante du moteur de recherche comportant un module logiciel d'analyse sémantique ;
- la figure 6 est un schéma de fonctionnement d'une variante du moteur de recherche de l'invention coopérant avec un moteur de recherche par mots-clés.

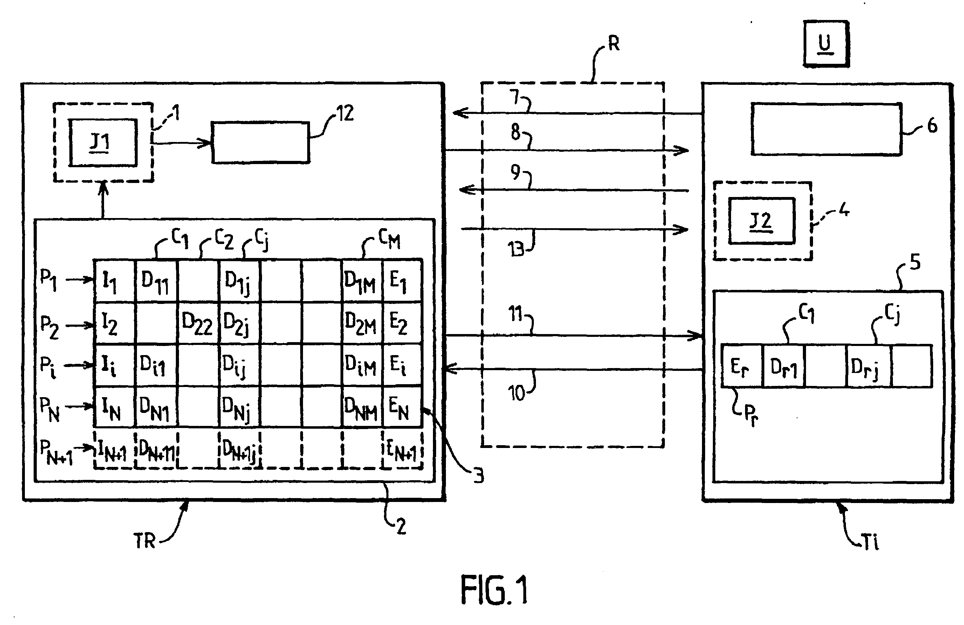

Le fonctionnement du moteur de recherche va maintenant être décrit en référence à la figure 1. Le moteur de recherche comporte un premier jeu J1 de codes d'instructions destinés à être exécutés par un terminal informatique de recherche TR. Le terminal de recherche TR comporte classiquement un processeur 1 et des moyens de stockage 2, comprenant par exemple une mémoire informatique et/ou un disque dur et/ou un lecteur-graveur de disque optique et/ou tout autre moyen. Une base de données 3 comprenant des données destinées à être traitées par le moteur de recherche est mémorisée dans lesdits moyens de stockage 2.

La base de données 3, de structure matricielle, comporte N lignes appelées profils, notés P1 à PN, et M colonnes appelés champs, notés C1 à CM, N et M étant deux nombres entiers supérieurs ou égaux à 1. Chaque profil Pi, i étant un nombre entier compris entre 1 et N, contient une pluralité de données Dij, chaque donnée Dij étant associée à un champ Cj, j étant un nombre entier compris entre 1 et M. Chaque profil contient au moins une donnée Dij, mais ne contient pas forcément des données Dij associées à tous les champs de la base. Ainsi, comme visible à la figure 1, le profil P1 contient la donnée D11 associée au champ C1 et ne contient aucune donnée associée au champ C2. Chaque profil Pi de la base 3 comporte également un numéro de profil Ii pour l'identifier de manière unique et un identificateur Ei, par exemple une chaîne de caractère, ledit identificateur Ei étant différent pour chaque profil. Chaque donnée Dij de la base 3 comporte une chaîne de caractères alphanumériques. Chaque profil Pi est de la base 3 a été défini par un utilisateur du moteur de recherche, comme il sera expliqué plus bas, et contient des informations que cet utilisateur a bien voulu fournir, en particulier des informations sur lui-même, sur ses goûts et ses préférences, notamment en matière de consommation, etc. Chaque champ Cj de la base 3 regroupe une catégorie prédéterminée de données, c'est-à-dire que les chaîne de caractères des différentes données Dij associée à un même champ Cj désignent différentes réponses possibles à une même question. Par exemple, le champ C5 peut porter sur les dates de naissance. Toutes les données Di5 de la base 3 sont alors des dates de naissance fournies par des utilisateurs du moteur de recherche. La question définissant le champ C5 est : quelle est votre date de naissance ?

Le terminal de recherche TR est relié par un réseau de télécommunication R à d'autres terminaux informatiques, dit terminaux d'interrogation TI. Par exemple, le réseau de télécommunication R peut être l'Internet et les terminaux d'interrogation TI peuvent comporter une multitude de terminaux d'interrogation reliés à ce réseau. Classiquement, chaque terminal informatique relié au réseau R est identifié par une adresse qui permet d'entrer en communication avec lui. Les communications entre terminaux informatiques par l'intermédiaire du réseau R sont effectuées selon des protocoles de communication classiques, comme par exemple le protocole TCP/IP.

Un quelconque des terminaux d'interrogation TI comporte classiquement un processeur 4, une unité de mémoire 5, des moyens d'interface 6, par exemple un écran et/ou un clavier et/ou une souris, pour permettre à un utilisateur U du terminal d'interrogation TI de lire et d'écrire des données et de faire exécuter des instructions. Lorsque le terminal de recherche TR reçoit depuis un terminal d'interrogation TI une commande de connexion, représentée par la flèche 7, il répond au terminal d'interrogation TI en lui envoyant un module logiciel d'interrogation 8, par exemple sous la forme de fichiers en langage HTML, JAVASCRIPT, et/ou autre, qui comprend un deuxième jeu J2 de codes d'instructions. Les codes d'instructions J2 sont alors exécutés par le terminal d'interrogation TI pour permettre à l'utilisateur U de générer une requête à traiter par le moteur de recherche.

Pour cela, les codes d'instructions J2 permettent d'abord à l'utilisateur U d'associer des données de référence Drj à des champs Cj de la base de données 3, lesdits champs Cj étant choisis au sein d'un ensemble prédéterminé de champs accessibles qui comprend la totalité ou une partie des champs Cj de la base 3. Pour chaque champ accessible Cj, la donnée de référence associée Drj peut être frappée sur un clavier par l'utilisateur U ou être choisie parmi une liste prédéterminée de données optionnelles associables au champ Cj, ladite liste étant contenue dans le module logiciel 8 reçu depuis le terminal de recherche TR. Lorsqu'il associe les données de référence Drj de son choix aux champs accessibles Cj de son choix, l'utilisateur U génère un profil de référence Pr, qui est temporairement mémorisé dans l'unité de mémoire 5, éventuellement pour une durée illimitée. L'utilisateur U est invité à fournir les données de référence Drj en réponse à une question qui lui est posée par l'intermédiaire des moyens d'interface 6. La question posée est celle qui définit le champ Cj correspondant. Par exemple, le champ C6 porte sur le mois de naissance de l'utilisateur U, la question qui le définit est : « quel est votre mois de naissance ? » et la liste de données optionnelles associables au champ C6 comporte les noms des 12 mois de l'année. Les codes d'instructions J2 permettent aussi à l'utilisateur U d'identifier le profil de référence Pr par un identificateur Er de son choix, par exemple un pseudonyme et un mot de passe.

Pour sauvegarder le profil généré par l'utilisateur U, les codes d'instructions J2 permettent d'envoyer à destination du terminal de recherche TR le profil de référence Pr accompagné de son identificateur Er, comme représenté par la flèche 10, afin de concaténer le profil de référence Pr avec la base de données 3. Le terminal de recherche TR compare l'identificateur Er du profil reçu avec les identificateurs E1 à EN des profils de la base 3. Si aucun profil Pi de la base 3 n'a son identificateur identique à l'identificateur reçu Er, le profil de référence Pr est sauvegardé comme nouveau profil P_{N+1} dans la base 3, comme représenté en traits interrompus à la figure 1. Chaque donnée Drj (j=1 à M) du profil de référence est alors sauvegardée en tant donnée D_{N+1,j} du nouveau profil P_{N+1} de la base 3.

Si l'identificateur Er est identique à l'identificateur Ei d'un profil Pi déjà mémorisé dans la base 3, deux cas se présentent :
- si l'utilisateur U avait auparavant fourni l'identificateur Ei pour télécharger le profil Pi comme profil de référence Pr, comme il sera expliqué plus bas, le profil de référence Pr est sauvegardé en remplacement du profil Pi de la base 3.
- si l'utilisateur U n'avait pas auparavant fourni l'identificateur Ei pour télécharger le profil Pi comme profil de référence Pr, le terminal de recherche TR envoie au terminal d'interrogation TI un message signalant que l'identificateur Er choisi n'est pas disponible et invitant l'utilisateur U à choisir un autre identificateur Er ;

Après que l'utilisateur U a sauvegardé un profil Pi dans la base 3, par exemple lors de sa première utilisation du moteur de recherche, il a possibilité de télécharger ce profil Pi sauvegardé pour générer son profil de référence Pr lors de ses utilisations ultérieures du moteur de recherche. Ainsi, l'utilisateur U n'est pas obligé de générer à chaque fois son profil de référence Pr en partant de rien. Pour cela, les codes d'instructions J2 permettent à l'utilisateur U d'envoyer à destination du terminal de recherche TR un identificateur de profil à télécharger, comme représenté par la flèche 10. En réponse à l'identificateur de profil reçu, les codes d'instructions J1 sont alors exécutés par le terminal de recherche TR pour comparer cet identificateur reçu aux identificateurs Ei (i=1 à N+1) des profils de la base 3. S'il existe un identificateur Ei identique à l'identificateur reçu, le profil Pi correspondant est envoyé au terminal d'interrogation TI, comme représenté par la flèche 11. S'il n'y a pas de profil correspondant dans la base 3, un message d'erreur peut être envoyé en réponse au terminal d'interrogation TI.

Le profil Pi envoyé par le terminal de recherche TR est alors mémorisé en tant que profil de référence Pr dans la mémoire 5 du terminal d'interrogation TI, chaque donnée Dij (j=1 à M) du profil Pi étant mémorisée en tant que donnée Drj du profil Pr, l'identificateur Ei étant mémorisé en tant qu'identificateur Er du profil Pr. L'utilisateur U peut alors changer le profil de référence Pr téléchargé, en ajoutant des données Drj audit profil Pr ou en modifiant des données Drj reçues. En revanche, l'utilisateur U ne peut pas modifier l'identificateur Ei du profil reçu, afin d'empêcher qu'il ne réplique le profil Pi plusieurs fois dans la base 3 sous différents identificateurs.

Ainsi, en générant un profil Pr lors de la première utilisation du moteur de recherche, puis en sauvegardant ce profil Pr comme profil Pi de la base 3, puis en téléchargeant à chaque nouvelle utilisation ce profil Pi comme profil de référence Pr, en ajoutant à chaque fois au profil Pr téléchargé des nouvelles données de référence Drj associées à des champs accessibles, puis en sauvegardant à chaque fois ce profil Pr comme profil Pi de la base 3, chaque utilisateur U du moteur de recherche constitue progressivement un profil Pi qui lui est personnel et qui contient de plus en plus d'informations. Chaque utilisateur U contribue ainsi à remplir petit à petit la base de données 3.

Dans une variante non représentée, les codes d'instruction J2 sont exécutés par le terminal d'interrogation TI pour attribuer, de manière connue ou non de l'utilisateur U, un identifiant K au terminal d'interrogation TI, l'identifiant K pouvant être inclus dans un fichier « cookie » mémorisé dans la mémoire 5. L'identifiant K est alors automatiquement utilisé comme identificateur Er du profil de référence Pr généré et/ou comme identificateur Ei du profil Pi à télécharger.

Dans une variante non représentée, l'utilisateur U a la possibilité de donner à un profil de référence Pr qu'il a généré à partir de rien, sans téléchargement préalable, l'identificateur Ei d'un profil Pi déjà mémorisé dans la base 3 et d'envoyer ce profil de référence Pr au terminal de recherche pour le concaténer avec la base 3. Dans cette variante, au lieu de répondre par un message signalant que l'identificateur Ei n'est pas disponible, le moteur de recherche remplace les données Dij du profil Pi mémorisé par les données Drj non vides du profil reçu sans affecter les données Dij du profil Pi mémorisé associées à des champs Cj pour lesquels le profil Pr reçu ne contient pas de donnée associée.

Au terme de l'étape de génération du profil de référence Pr, ce dernier contient au moins une donnée Drj associée à un champ accessible Cj. Dans l'exemple représenté à la figure 1, le profil de référence Pr généré contient aussi une donnée Dr1 associée au champ C1. Les codes d'instructions J2 permettent ensuite à l'utilisateur U d'envoyer la requête à destination du terminal de recherche TR, comme représenté par la flèche 9. La requête 9 envoyée comporte le profil de référence Pr et la désignation d'un domaine d'interrogation. Le domaine d'interrogation désigné est un ensemble d'un ou plusieurs ou la totalité des champs Cn de la base de données 3. Les champs Cm du domaine d'interrogation sont prédéterminés par le module logiciel 8 ou sont choisis par l'utilisateur U.

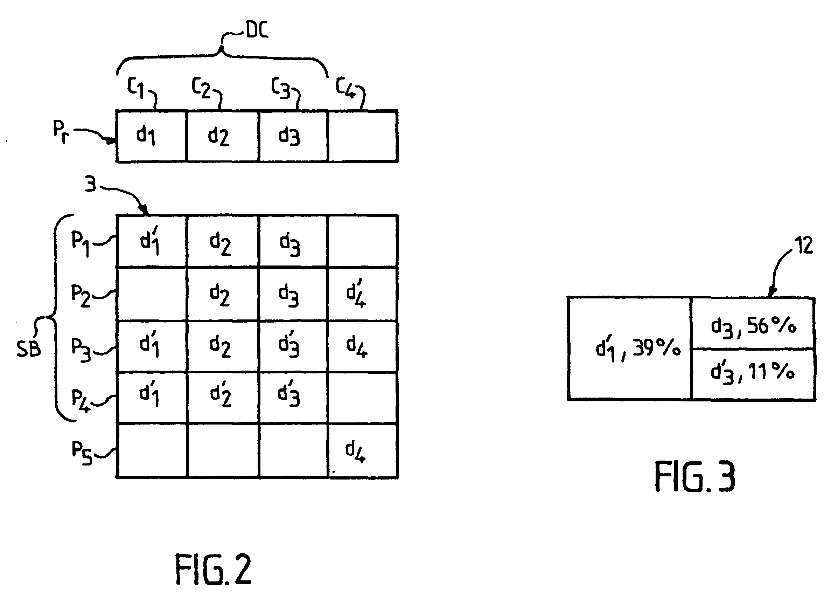

Après réception de la requête 9 envoyée par le terminal d'interrogation TI, les codes d'instructions J1 sont exécutés par le terminal de recherche TR pour traiter la requête 9 en suivant un algorithme prédéterminé, qui va maintenant être décrit en référence à un exemple représenté à la figure 2. La requête de l'exemple comporte le profil de référence représenté à la figure 2 et désigne les champs C1 et C3 comme domaine d'interrogation.
- Dans une première étape, une sous-base SB, contenant des profils Pk à comparer avec le profil de référence Pr de la requête 9, est extraite de la base de données 3. Dans une première variante du moteur de recherche, la sous-base SB comporte la totalité des profils de la base 3. Dans une seconde variante, la sous-base SB est constituée de tous les profils Pi de la base de données comportant une donnée Dim associée à au moins un des champs Cm du domaine d'interrogation de la requête 9. Dans l'exemple, où la seconde variante est illustrée, la sous-base SB extraite comporte les profils P1, P2, P3 et P4, mais pas le profil P5 qui ne contient de donnée associée ni à C1 ni à C3.
   Dans une deuxième étape, un compteur d'occurrence Qn distinct est calculé pour chaque champ Cn d'un domaine de comparaison DC, ledit domaine de comparaison DC étant constitué de tous les champs Cj de ladite base de données 3 auxquels une donnée Drj dudit profil de référence Pr est associée. Dans l'exemple, le domaine de comparaison contient les champs C1, C2 et C3. Le calcul des compteurs d'occurrence Qn comporte les étapes consistant successivement à :
   a) sélectionner un champ Cn dudit domaine de comparaison (par exemple le champ C2),
   b) une seule fois pour chaque profil Pk de la sous-base SB (c'est à dire pour les profils P1 à P4 de l'exemple), effectuer un test de correspondance entre la donnée Drn du profil de référence Pr associée au champ Cn, dite donnée de référence (c'est-à-dire la donnée d2 de l'exemple), et la donnée Dkn du profil Pk de la sous-base SB associée audit champ Cn, dite donnée à comparer (c'est-à-dire la donnée d2 du profil P1, la donnée d2 du profil P2, la donnée d2 du profil P3 et la donnée d₂' du profil P4). Le résultat du test de correspondance est un nombre booléen, vrai si et seulement si la donnée à comparer Dkn est en correspondance par une loi logique prédéterminée avec la donnée de référence Drn. Le résultat du test est notamment faux lorsque ladite donnée à comparer est vide ou inexistante. La loi logique prévoit que deux données sont en correspondance lorsqu'elles sont identiques. Dans l'exemple, le résultat du test est vrai pour la donnée d2 du profil P1, vrai pour la donnée d2 du profil P2, vrai pour la donnée d2 du profil P3 et faux pour la donnée d₂' du profil P4. Les données étant des chaînes de caractères, la loi logique peut aussi être choisie pour que la donnée à comparer Dkn soit en correspondance avec la donnée de référence Drn lorsque la première contient une partie substantielle de la deuxième. Par exemple, selon cette variante, la chaîne de caractère à comparer Dkn=«chien» est en correspondance avec la chaîne de caractère de référence Drn=« chien et chat ». Dans une autre variante, la base de données 3 est multilingue et contient, par exemple, des mots en français et en anglais. La loi logique prévoit alors que deux données sont en correspondance lorsqu'elles sont la traduction l'une de l'autre dans deux langues. Par exemple, selon cette variante, la chaîne de caractère à comparer Dkn=« chien » est en correspondance avec la chaîne de caractère de référence Drn=« dog ».
   c) rendre le compteur d'occurrence Qn égal au nombre de profils Pk de ladite sous-base pour lesquels le résultat dudit test de correspondance effectué à l'étape b) est vrai. Dans l'exemple avec le champ C2, le compteur Q2 vaut donc Q2=3.
   d) répéter les étapes a) à c) en sélectionnant un autre champ Cn du domaine de comparaison n'ayant pas encore été sélectionné à l'étape a), s'il en existe. Dans l'exemple, en sélectionnant le champ C1, on obtient ainsi Q1=0, puis en sélectionnant le champ C3, on obtient Q3=2. Dans une variante non représentée de l'algorithme, le domaine de comparaison DC est constitué de tous les champs de la base de données 3 auxquels une donnée du profil de référence Pr est associée, à l'exclusion de tous les champs Cm du domaine d'interrogation.
- Dans une troisième étape, un coefficient partiel αn distinct est calculé pour chaque champ Cn du domaine de comparaison DC dont le compteur d'occurrence Qn calculé à l'étape précédente est non nul (c'est-à-dire pour les champs C2 et C3 de l'exemple.) Chaque coefficient partiel αn est rendu égal à la valeur F(Qn) prise par une fonction de pondération réelle prédéterminée F d'au moins une variable x, lorsque sa variable x prend la valeur dudit compteur d'occurrence Qn. Ainsi, dans l'exemple, on obtient les deux coefficients partiels : α2=F(3) et α3=F(2). La fonction F(x) peut être une fonction réelle quelconque, polynomiale, exponentielle, logarithmique, ou autre. Dans un mode de réalisation préféré, il s'agit de la fonction inverse F(x)=1/x. Dans l'exemple, on obtient alors : α2=1/3 et α3=1/2.
- Dans une quatrième étape, un coefficient de pondération distinct est calculé pour chaque profil Pk de la sous-base SB, chaque coefficient de pondération CPk calculé étant égal à une somme de coefficients partiels distincts αn calculés lors de l'étape précédente. Cette somme porte sur les coefficients partiels αn de tous ceux des champs Cn du domaine de comparaison pour lesquels le résultat du test de correspondance effectué à la deuxième étape entre le profil de référence Pr et le profil Pk auquel se rapporte ledit coefficient de pondération CPk est vrai, et uniquement sur ces champs-ci. Dans l'exemple, pour le profil P1, le coefficient de pondération CP1 est ainsi calculé comme la somme des coefficients partiels α2 et α3, soit CP1=1/3+1/2=5/6. En effet, le résultat du test de correspondance est faux pour le champ C1 car la donnée d₁' du profil P1 n'est pas identique à la donnée d1 du profil Pr. Les autres coefficients de pondération calculés sont : CP2=α2+α3=5/6, CP3=α2=1/3 et CP4=0.
- Dans une cinquième étape, une fréquence pondérée FPqm est calculée pour chaque donnée Dim associée à un champ Cm du domaine d'interrogation dans la sous-base SB. Dans l'exemple, une fréquence pondérée FP11 est calculée pour la donnée d₁' et deux fréquences pondérées FP13 et FP23 sont calculées pour les données d3 et d₃'. Le calcul des fréquences pondérées FPqm comprend les étapes consistant, pour chaque champ Cm du domaine d'interrogation (par exemple le champ C1) à :
   a) sélectionner une donnée Dqm associée au champ Cm (par exemple la donnée d₁'). La donnée sélectionnée est issue d'un profil Pq parmi l'ensemble des profils Pk de la sous-base SB qui comprennent une donnée non-vide Dkm associée au champ Cm (dans l'exemple, cet ensemble comporte les profils P1, P3 et P4 pour le champ C1).
   b) affecter à la donnée sélectionnée Dqm une fréquence pondérée FPqm égale à la somme des coefficients de pondération CPk des profils Pk dudit ensemble de profils dont la donnée Dkm associée au champ Cm est identique à la donnée sélectionnée Dqm. Ainsi pour la donnée d₁' sélectionnée, on calcule la fréquence pondérée FP11 comme la somme des coefficients de pondération CP1, CP3 et CP4, puisque les profils P1 P3 et P4 comportent la donnée d₁' associée au champ C1. On obtient donc : FP11=5/6+1/3+0=7/6.
   c) répéter les étapes a) et b) en sélectionnant une autre donnée n'ayant pas encore été sélectionnée à l'étape a), s'il en existe. Dans l'exemple, on sélectionne ensuite une donnée associée au champ C3 dans un profil parmi l'ensemble constitué des profils P1à P4, qui contiennent tous une donnée non vide pour le champ C3. De préférence, on commence par sélectionner la donnée du profil de cet ensemble dont le coefficient de pondération est le plus élevé, soit ici dans le profil P1 ou le profil P2. La donnée sélectionnée est donc d3. La fréquence pondérée obtenue pour cette donnée est FP13=CP1+CP2=5/3. Pour la donnée d₃', sélectionnée ensuite, on obtient FP23=CP3+CP4=1/3. Il n'y alors plus de nouvelle donnée à sélectionner et la cinquième étape est terminée.
- Dans une sixième étape, une réponse 12 à la requête 9 est générée par le terminal de recherche TR. La réponse 12 est générée en extrayant de la sous-base SB des données, dites données de réponse, qui sont, pour chaque champ Cm du domaine d'interrogation, celles qui possèdent les fréquences pondérées FPqm les plus élevées. Un nombre maximal NR de données de réponse Dqm associées à chaque champ Cm du domaine d'interrogation est extrait de la sous-base et inclus dans la réponse. Par exemple, cinq données de réponse au maximum sont fournies pour chaque champ Cm du domaine d'interrogation. Bien entendu, la sous-base SB peut contenir moins de NR données différentes associées au champ Cm. Dans l'exemple, la réponse 12 générée, représentée à la figure 3, contient les données d₁', d3 et d₃'.
- Dans une septième étape, un coefficient discriminant normalisé δqm, compris entre 0 et 100%, est calculé pour chaque donnée de réponse Dqm. Lorsque la fonction de pondération est la fonction inverse F(x)=1/x, le coefficient discriminant normalisé δqm est égal à la fréquence pondérée FPqm de la donnée de réponse Dqm auquel il se rapporte divisée par le nombre NC de champs Cn distincts compris dans le domaine de comparaison DC. Dans l'exemple, on a NC=3 et on obtient les trois coefficients normalisés : δ11=7/18=39%, δ13=5/9=56%, δ23=1/9=11%. Les coefficients discriminants normalisés δqm sont ensuite inclus dans la réponse 12, comme visible à la figure 3.
- Dans une étape optionnelle de filtrage, exécutée après la sixième ou après la septième étape, chaque donnée de réponse Dqm est comparée à la donnée Drm associée au même champ Cm qu'elle dans le profil de référence Pr. Si la donnée de réponse Dqm est identique à la donnée de référence Drm, elle est supprimée de la réponse 12. Dans l'exemple, la donnée d3 est alors supprimée de la réponse 12 car elle est identique à la donnée de référence d3 associée au champ C3.
- Dans une autre étape optionnelle de filtrage, exécutée après la septième étape, toute donnée de réponse Dqm dont le coefficient normalisé δqm est inférieur à un seuil S prédéterminé, par exemple S=1%, est supprimée de la réponse 12. Ainsi la réponse 12 peut éventuellement ne comporter aucune donnée associée à un des champs Cm d'interrogation, voire être vide.

La réponse 12, générée selon l'algorithme décrit ci-dessus, est enfin envoyée par le réseau R à destination du terminal d'interrogation TI, comme représenté par la flèche 13 de la figure 1. Les différentes étapes d'algorithme décrites peuvent être exécutées dans un autre ordre et/ou être imbriquées les unes dans les autres sans changer la réponse résultante.

Il est prévu que le domaine d'interrogation peut comporter tous les champs Cj de la base de données 3. Dans ce cas, les données de réponse de la réponse 12 peuvent se représenter sous la forme d'un profil de réponse, qui contient, en association à chaque champ Cj, une donnée Dqj dont la fréquence pondérée FPqj est la plus élevée parmi toutes les données de réponse associées au champ Cj. Ce profil de réponse n'est a priori identique à aucun des profils Pi mémorisés dans la base de données 3. Il représente le profil présentant une « affinité » maximale avec le profil de référence Pr, l'affinité dont il est question ici étant implicitement définie par les fréquences pondérées et les coefficients normalisés.

Chaque coefficient normalisé δqm est en effet destiné à représenter de manière qualitative et quantitative une probabilité que l'utilisateur U ayant généré le profil de référence Pr reconnaisse ses propres caractéristiques, goûts et préférences dans la donnée Dqm en tant que réponse à la question définissant le champ d'interrogation Cm. Autrement dit, le coefficient normalisé est destiné à représenter une probabilité que l'utilisateur U choisisse de son propre gré la donnée Dqm comme réponse à cette question, s'il a connaissance de l'objet désigné par la donnée Dqm et sous réserve que cette question ne porte pas sur une information objective (quel est votre âge ?), mais porte sur une caractéristique subjective de l'utilisateur U (quel est votre acteur préféré ?). Un avantage du moteur de recherche est que l'utilisateur U n'a souvent pas connaissance a priori dudit objet, la donnée Dqm ayant été entrée dans la base 3 par l'un des nombreux utilisateurs ayant un profil personnel mémorisé dans celle-ci. Le moteur de recherche fourni donc aussi un système d'aide à la décision.

La méthode d'extraction des données de réponse et de calcul des fréquences pondérées est une méthode de logique floue fondée sur l'idée qu'à une donnée apparaissant dans un profil qui présente par ailleurs des données communes avec le profil de référence, on peut attribuer une probabilité non nulle de correspondre aux caractéristiques de l'utilisateur U. Lorsque la fonction de pondération F est décroissante, cette méthode est aussi fondée sur l'idée qu'une telle probabilité est d'autant plus grande que lesdites données communes sont peu représentées dans l'ensemble des profils Pi de la base de données 3, et au contraire d'autant plus faible que lesdites données communes sont courantes dans l'ensemble des profils Pi de la base de données 3.

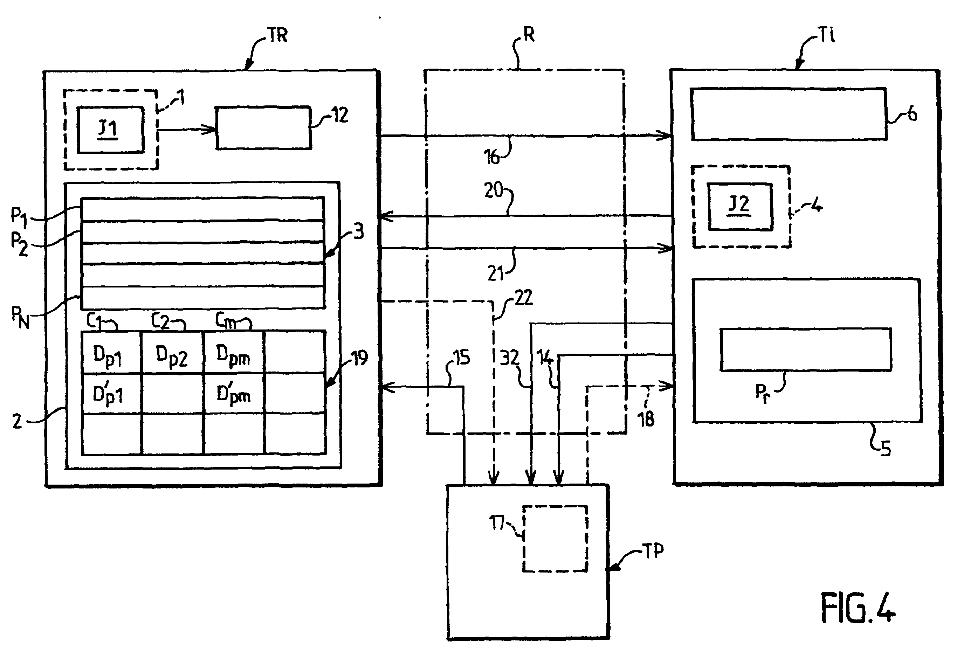

D'autre caractéristiques de l'invention vont maintenant être décrites en référence à la figure 4. D'autres terminaux informatiques, dits terminaux partenaires TP, dont un seul est représenté à la figure 4, sont reliés au réseau de télécommunication R. Chaque terminal partenaire TP est de préférence destiné à recevoir des commandes pour le compte d'un fournisseur partenaire apte à fournir une gamme de produits et/ou services à des clients. Par exemple, le terminal partenaire TP est un serveur informatique d'une entreprise de commerce électronique. Un utilisateur U d'un terminal partenaire TP qui souhaite faire appel au moteur de recherche peut, depuis son terminal d'interrogation TI, émettre une commande de connexion à destination du terminal partenaire TP, comme représenté par la flèche 14. En réponse à la commande de connexion 14, le terminal partenaire TP émet une commande de mise en relation 15 à destination du terminal de recherche TR. En réponse à la commande de mise en relation 15, le terminal de recherche TR envoie le module logiciel 8 à destination du terminal d'interrogation TI, comme représenté par la flèche 16. En variante, le module logiciel 8 peut être mémorisé dans une mémoire 17 du terminal partenaire TP et envoyé directement par ce dernier en réponse à la commande de connexion 14, comme représenté par la flèche 18.

Le module logiciel 8 envoyé est spécifique au terminal partenaire TP ayant reçu la commande de connexion 14. Ce module logiciel 8 contient le deuxième jeu de codes d'instructions J2 pour permettre à l'utilisateur U de générer sa requête comme décrit précédemment. De plus, il prédétermine les champs Cm du domaine d'interrogation de la requête de manière que lesdits champs portent sur des caractéristiques des produits et/ou services à fournir par le fournisseur partenaire. Par exemple, si le fournisseur partenaire est un disquaire, un champ d'interrogation porte sur le nom du musicien préféré de l'utilisateur U, le titre de son disque préféré, etc. Le module logiciel 8 prédétermine aussi les champs accessibles en fonction du fournisseur partenaire.

Le terminal de recherche TR comporte une seconde base de données 19, jointe ou disjointe de la base 3, mémorisée dans les moyens de stockage 2. La seconde base de données 19 contient des données-partenaire Dpj associées à des champs Cj de la base 3, notamment des données-partenaire Dpm associées au(x) champ(s) Cm prédéterminé(s) du domaine d'interrogation. Les données-partenaire Dpm contiennent par exemple la liste de tous les produits et/ou services disponibles auprès du fournisseur partenaire. La base 19 contient aussi des données complémentaires D'pm associées aux données-partenaire Dpm et portant sur des caractéristiques des produits et/ou services désignés par les données-partenaire Dpm, par exemple sur le prix desdits produits et/ou services. Le module logiciel 8 envoyé contient, pour chaque champ accessible Cj prédéterminé, des données optionnelles associables qui sont extraites des données-partenaire Dpj associées audit champ Cj. Ainsi, pour un champ portant sur un titre de disque, des titres de disques disponibles auprès du fournisseur partenaire sont proposées à l'utilisateur U pour générer son profil de référence.

L'utilisateur U envoie ensuite au terminal de recherche TR la requête générée depuis le terminal d'interrogation TI à l'aide du module logiciel 8, comme représenté par la flèche 20. Le traitement de cette requête 20 comporte, par exemple à la suite de l'étape optionnelle de filtrage susmentionnée, une étape de filtrage par partenaire, au cours de laquelle chaque donnée de réponse Dqm associée au champ Cm est comparée aux données-partenaire Dpm de la base 19 associées au même champ Cm. Toute donnée de réponse ne faisant pas partie des données-partenaire Dpm du terminal partenaire TP à l'origine de la commande de mise en relation 15 est supprimée de la réponse 12 au cours de cette étape. Ainsi, par exemple, pour le champ d'interrogation portant sur un titre de disque, la réponse 12 ne peut contenir, à l'issue de l'étape de filtrage par partenaire, que des titres de disques disponibles auprès dudit fournisseur partenaire. Au cours de cette étape, une adresse du terminal partenaire et/ou du fournisseur partenaire, par exemple sous la forme d'un attribut des données de réponse ou d'un lien HTML, est incluse dans la réponse 12. La réponse 12 est envoyée au terminal d'interrogation TI, comme représenté par la flèche 21, afin que l'utilisateur U puisse ensuite entrer en contact avec le fournisseur partenaire pour commander le produit/service désigné dans la réponse 12, comme représenté par la flèche 32. En variante, une adresse du terminal d'interrogation TI est incluse dans la réponse 12 et celle-ci est envoyée au terminal partenaire TP, comme représenté par la flèche 22, afin que le fournisseur partenaire puisse ultérieurement entrer en contact avec l'utilisateur U pour lui fournir des informations à caractère commercial ou publicitaire pertinentes vis-à-vis de la requête 20 émise et/ou lui proposer de commander le produit/service désigné dans la réponse 12.

Le module logiciel 8 permet aussi à un utilisateur U du terminal d'interrogation TI d'imposer dans sa requête un critère objectif devant être vérifié par les données de réponse. Pour cela, l'utilisateur U peut sélectionner une caractéristique au sujet de laquelle il existe des données complémentaires D'pm dans la base 19, par exemple le prix des produits désignés par les données-partenaire Dpm, et prédéterminer un critère à satisfaire par ladite caractéristique, par exemple un seuil S ne devant pas être dépassé. Lors de l'étape de filtrage par partenaire, pour chaque donnée de réponse qui est aussi une donnée-partenaire Dpm, un test logique consistant à vérifier si la donnée complémentaire D'pm associée à la donnée-partenaire Dpm et portant sur la caractéristique sélectionnée remplit le critère prédéterminé. Lorsque le résultat du test logique est négatif, la donnée de réponse est exclue de la réponse 12. Par exemple, si le champ d'interrogation porte sur un titre de disque, l'utilisateur peut imposer que les disques dont les titres seront fournis dans la réponse 12 auront un prix inférieur à 15 €.

Le moteur de recherche est destiné à être utilisé conjointement par une multitude de terminaux d'interrogation TI1, TI2, ... et une multitude de terminaux partenaires TP1, TP2,..., tous reliés au terminal de recherche TR par le réseau de télécommunication R. Le procédé d'assistance par ordinateur pour faire des offres commerciales à l'aide du moteur de recherche présente plusieurs avantages : comme la base de données 3 comporte les profils des utilisateurs de tous les terminaux partenaires, elle contient des données qui ne seraient pas accessibles à chaque fournisseur partenaire individuel. De plus, la base 3 et le moteur de recherche n'utilisent quasiment aucune des ressources de mémoire et de calcul des terminaux partenaires. En fonction de ses besoins, chaque utilisateur d'un ou plusieurs terminaux d'interrogation TI génère et/ou modifie un profil de la base 3 qui lui est personnel au cours de multiples requêtes envoyées successivement au moyen des modules logiciels 8 spécifiques des différents terminaux partenaires TP. A chaque fois, les champs accessibles peuvent être différents, de sorte que le profil Pi est complété progressivement. Un avantage du moteur de recherche réside dans le fait que tous les champ du domaine de comparaison DC servent à générer la réponse 12 à la requête. Lorsqu'un profil Pi a servi à générer successivement plusieurs requêtes, le domaine de comparaison DC contient des champs différents et généralement plus nombreux que les champs accessibles, qui sont les seuls visibles de l'utilisateur U. Ceci permet de tenir compte d'un très grand nombre de caractéristiques de l'utilisateur U pour traiter sa requête, sans lui demander une quantité excessive d'informations à fournir en une seule fois, ni lui exposer une liste, éventuellement longue, des données qu'il a déjà fournies, ce qui pourrait dans les deux cas le décourager.

Dans une variante de réalisation non représentée, le terminal de recherche TR comporte la base 19 contenant des données-partenaire Dpm désignant les biens disponibles auprès de divers fournisseurs partenaires. Dans ce cas, le terminal d'interrogation TI entre en communication, directement ou indirectement, avec le terminal TR, comme décrit précédemment en référence aux figures 1 et 4. Au cours de l'étape de filtrage par partenaire, le terminal de recherche TR joint à chaque donnée de réponse Dqm une adresse du fournisseur partenaire auprès duquel le produit désigné par ladite donnée de réponse Dqm est disponible, quel que soit ledit fournisseur partenaire.

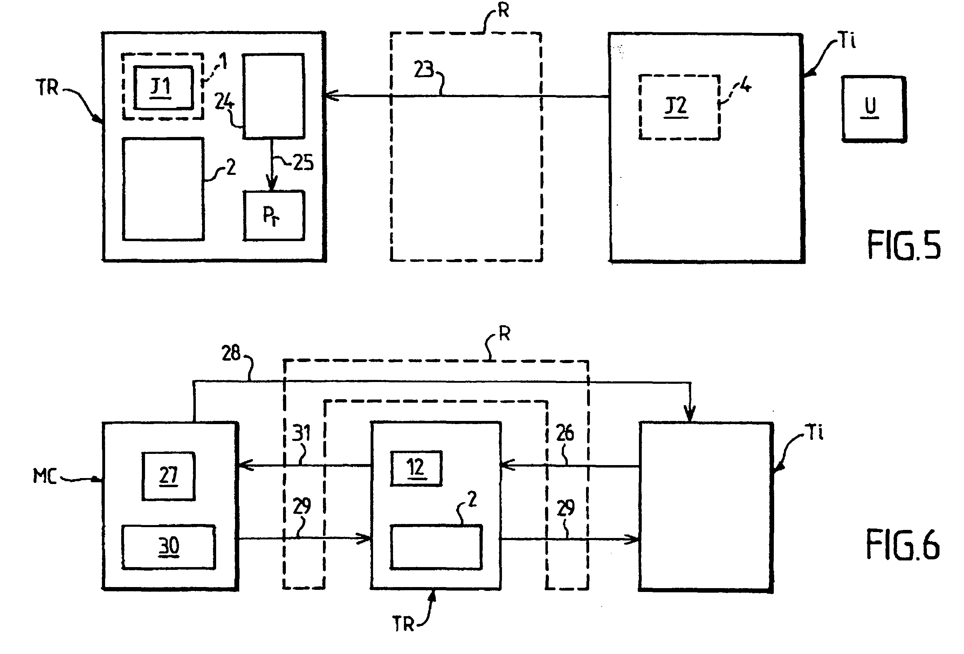

Dans une autre variante de réalisation, représentée à la figure 5, les codes d'instruction J2 permettent à l'utilisateur U de générer une requête 24 contenant seulement une phrase ou un groupe de mots, et de l'envoyer au terminal de recherche TR, comme indiqué par la flèche 23. Dans ce cas, les codes d'instruction J1 sont exécutés par le terminal de recherche TR dès la réception de la requête 24 pour effectuer une étape de reconnaissance sémantique au cours de laquelle un profil de référence Pr est automatiquement généré à l'aide des mots de la requête 24, qui sont automatiquement associés à des champs Cj de la base de donnée 3, comme indiqué par la flèche 25. Le champ Cm du domaine d'interrogation est aussi automatiquement défini en fonction du premier mot de la requête 24.

Par exemple, la base 3 comprend le champs C1 portant sur un nom de restaurant préféré, le champ C2 portant sur le type de cuisine préféré, et le champ C3 portant sur l'animal préféré. La requête 24 s'énonce : « restaurant italien acceptant les chiens ». Le profil de référence automatiquement généré comporte «italien» pour le champ C2 et « chien » pour le champ C3, le champ C1 étant automatiquement sélectionné comme domaine d'interrogation.

Dans encore une autre variante de réalisation, représentée à la figure 6, le terminal de recherche TR est relié par le réseau R à un terminal de recherche par mots clés MC. Après génération de la réponse 12 à une requête 26 envoyée par un terminal d'interrogation TI, les codes d'instruction J1 sont exécutés pour envoyer la donnée de réponse Dqm (qui est une chaîne de caractères) dont le coefficient normalisé δqm est maximal à destination du terminal MC, comme indiqué par la flèche 31, afin que ce dernier effectue une recherche par mots-clés sur l'objet désigné par la donnée Dqm. Classiquement, le terminal MC permet d'extraire, depuis une base 30 de documents électroniques mémorisés par ce dernier, la liste 27 des documents qui contiennent la chaîne de caractères Dqm. Ensuite, le terminal MC envoie la liste 27 à destination du terminal d'interrogation TI, directement ou par l'intermédiaire du terminal de recherche TR, comme indiqué par les flèches 28 et 29 respectivement.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si ceux-ci et celles-ci entrent dans le cadre de l'invention tel que défini dans les revendications ci-après.

## Revendications

1. Système informatique constitué d'un terminal informatique, dit terminal de recherche (TR) comprenant des moyens, dits moteur de recherche, adaptés à extraire d'une base de données (3) une liste de données (12) en réponse à une requête (9,20,24,26), ladite base de données (3) étant de structure matricielle et comportant une pluralité de lignes Pi (i=1 à N) de données enregistrées Dij, lesdites lignes Pi étant appelées des profils, et une pluralité de colonnes Cj (j=1 à M) appelées champs, chaque champ Cj définissant une catégorie prédéterminée de données Dij qui lui sont associées, chaque profil Pi comportant un identificateur Ei pour l'identifier de manière unique et des données associées chacune à un champ Cj de ladite base, chaque profil Pi de la base de données comportant au moins une donnée Dij associée à au moins un desdits champs Cj, ledit moteur de recherche contenant un premier jeu (J1) de codes d'instruction propres à être lus ou stockés sur un support, et exécutables par ledit terminal de recherche (TR), ledit terminal de recherche (TR) comportant des moyens de stockage (2) pour mémoriser ladite base de données et étant relié à un réseau de télécommunication (R), pour effectuer les opérations successives comportant les étapes consistant à :
1) envoyer, par l'intermédiaire dudit réseau de télécommunication (R) et à destination d'un deuxième terminal informatique, dit terminal d'interrogation (TI), un module logiciel d'interrogation (8) contenant un deuxième jeu (J2) de codes d'instruction, propres à être lus ou stockés sur un support et exécutables par ledit terminal d'interrogation (TI) pour :
1a) constituer un profil de référence Pr en associant des données de référence Drj à au moins un champ Cj parmi un ensemble de champs de ladite base, dit ensemble de champs accessibles, la constitution dudit profil de référence Pr étant effectuée directement ou indirectement par un utilisateur (U) dudit terminal d'interrogation (TI) ;
1b) envoyer à destination dudit terminal de recherche (TR) une requête comprenant ledit profil de référence Pr et désignant un domaine d'interrogation, ledit domaine d'interrogation comportant au moins un des champs Cⱼ de ladite base de données (3), chaque champ Cm dudit domaine d'interrogation étant présélectionné ou à sélectionner par un utilisateur (U) dudit terminal d'interrogation (TI) ;
2) lire ladite requête reçue par l'intermédiaire dudit réseau de télécommunication (R) ;
3) extraire de ladite base de données (3) une sous-base (SB) de profils Pk à comparer avec ledit profil de référence Pr, ladite sous-base (SB) comportant la totalité ou une partie des profils de ladite base de données (3) ;
4) calculer des compteurs d'occurrence, un compteur d'occurrence Qn distinct étant calculé pour chaque champ Cn d'un domaine de comparaison (DC), ledit domaine de comparaison (DC) étant constitué de tous les champs Cj de ladite base de données (3) auxquels une donnée Drj dudit profil de référence Pr est associée, le calcul des compteurs d'occurrence Qn comportant les étapes consistant successivement à :
4a) sélectionner un champ Cn dudit domaine de comparaison (DC),
4b) une seule fois pour chaque profil Pk de ladite sous-base (SB), effectuer un test de correspondance entre la donnée Drn du profil de référence Pr associée audit champ Cn, dite donnée de référence, et la donnée Dkn du profil Pk de la sous-base (SB) associée audit champ Cn, dite donnée à comparer, le résultat dudit test de correspondance étant un nombre booléen, le résultat dudit test étant vrai à chaque fois que ladite donnée à comparer Dkn est en correspondance par une loi logique prédéterminée avec ladite donnée de référence Drn, le résultat dudit test étant notamment faux lorsque ladite donnée à comparer est vide ou inexistante,
4c) rendre ledit compteur d'occurrence Qn égal au nombre de profils Pk de ladite sous-base (SB) pour lesquels le résultat dudit test de correspondance effectué à l'étape 4b) est vrai,
4d) répéter les étapes 4a) à 4c) en sélectionnant un autre champ Cn du domaine de comparaison (DC) n'ayant pas encore été sélectionné à l'étape 4a), s'il en existe ;
5) calculer des coefficients partiels, un coefficient partiel αn distinct étant calculé pour chaque champ Cn dudit domaine de comparaison (DC) dont le compteur d'occurrence Qn calculé à l'étape 4c) est non nul, chaque coefficient partiel αn étant rendu égal à la valeur F(Qn) prise par une fonction de pondération réelle prédéterminée F(x) d'au moins une variable x, lorsque ladite variable x prend la valeur dudit compteur d'occurrence Qn ;
6) calculer des coefficients de pondération CPk, un coefficient de pondération distinct étant calculé pour chaque profil Pk de ladite sous-base (SB), chaque coefficient de pondération CPk calculé étant égal à une somme de coefficients partiels distincts αn calculés à l'étape 5), ladite somme portant sur les coefficients partiels αn de tous ceux des champs Cn du domaine de comparaison (DC) pour lesquels le résultat du test de correspondance effectué à l'étape 4) entre ledit profil de référence Pr et le profil Pk auquel se rapporte ledit coefficient de pondération CPk est vrai, et uniquement sur ces champs-ci ;
7) calculer des fréquences pondérées FPqm, une fréquence pondérée FPqm étant calculée pour chaque donnée Dim associée à un champ Cm du domaine d'interrogation dans ladite sous-base (SB) de profils, le calcul des fréquences pondérées FPqm comprenant les étapes consistant, pour chaque champ Cm du domaine d'interrogation, à
7a) sélectionner une donnée Dqm associée audit champ Cm, ladite donnée sélectionnée étant issue d'un profil Pq parmi l'ensemble des profils Pk de ladite sous-base (SB) qui comprennent une donnée non-vide Dkm associée audit champ Cm,
7b) affecter à ladite donnée sélectionnée Dqm une fréquence pondérée FPqm égale à la somme des coefficients de pondération CPk des profils Pk dudit ensemble de profils dont la donnée Dkm associée audit champ Cm est identique à ladite donnée sélectionnée Dqm,
7c) répéter les étapes 7a) et 7b) en sélectionnant une autre donnée n'ayant pas encore été sélectionnée à l'étape 7a), s'il en existe ;
8) générer une réponse (12) à ladite requête, ladite réponse comportant une liste de données Dqm issues de ladite sous-base (SB), dites données de réponse, lesdites données de réponse Dqm étant celles qui possèdent les fréquences pondérées FPqm les plus élevées parmi les données associées aux champs Cm du domaine d'interrogation, le nombre maximal NR de données de réponse Dqm associées à chaque champs Cm du domaine d'interrogation étant prédéterminé et supérieur ou égal à un ;
9) envoyer ladite réponse à un destinataire de réponse par l'intermédiaire dudit réseau de télécommunication (R).

2. Système selon la revendication 1, dans lequel ladite liste de réponse est ordonnée par ordre croissant ou décroissant des fréquences pondérées FPqm des données de réponse Dqm.

3. Système selon l'une des revendications 1 et 2, dans lequel ladite fonction de pondération F(x) de l'étape 5) précitée est une fonction positive d'une seule variable entière x, ladite fonction de pondération étant de préférence décroissante, de préférence égale à l'inverse de ladite variable entière x.

4. Système selon l'une des revendications 1 à 3, dans lequel ladite donnée à comparer Dkn à l'étape 4b) précitée est en correspondance par ladite loi logique prédéterminée avec ladite donnée de référence Drn si elle contient au moins une partie substantielle de ladite donnée de référence Drn.

5. Système selon l'une des revendications 1 à 4, dans lequel les codes dudit premier jeu (J1) sont exécutables par ledit terminal de recherche (TR) pour, à l'étape 8 précitée :
a/ calculer des coefficients normalisés (δqm) compris entre 0 et 100%, un coefficient normalisé δqm étant calculé pour chaque donnée de réponse Dqm, le calcul de chaque coefficient normalisé δqm comprenant une étape consistant à diviser la fréquence pondérée FPqm de ladite donnée de réponse Dqm par le nombre NC de champs Cn distincts compris dans ledit domaine de comparaison (DC),
b/ inclure dans ladite réponse (12) générée le coefficient normalisé δqm de chaque donnée de réponse Dqm.

6. Système selon l'une des revendications 1 à 5, dans lequel les codes dudit premier jeu (J1) sont exécutables par ledit terminal de recherche (TR) pour filtrer lesdites données de réponse Dqm, afin de supprimer de ladite réponse générée (12) toute donnée de réponse Dqm associée à un champ Cm et sensiblement identique à une donnée Drm dudit profil de référence Pr associée au même champ Cm.

7. Système selon l'une des revendications 1 à 6, dans lequel les codes d'instruction dudit deuxième jeu (J2) sont exécutables par ledit terminal d'interrogation (TI) pour mémoriser temporairement dans une mémoire (5) du terminal d'interrogation (TI) ledit profil de référence Pr et un identificateur Er dudit profil de référence, ledit identificateur Er étant fourni directement ou indirectement par un utilisateur (U) dudit terminal d'interrogation (TI) ; et pour envoyer ledit profil de référence Pr et ledit identificateur Er à destination dudit terminal de recherche (TR).

8. Système selon la revendication 7, dans lequel les codes dudit premier jeu (J1) sont exécutables par ledit terminal de recherche (TR) pour concaténer ledit profil de référence Pr reçu avec ladite base de données (3); la concaténation étant effectuée de manière que, d'une part, s'il existe un profil Pi de ladite base de données (3) dont l'identificateur Ei est identique à l'identificateur Er dudit profil de référence Pr, les données de référence Drj associées aux champs Cj pour lesquels il n'existe pas de donnée Dij associée dans le profil Pi sont ajoutées audit profil Pi ; d'autre part, si aucun profil Pi de ladite base de données (3) n'a un identificateur Ei identique à l'identificateur Er dudit profil de référence Pr, ledit profil de référence Pr étant concaténé en tant que nouveau profil (P_{N+1}) de ladite base de données (3).

9. Système selon la revendication 8, dans lequel ledit profil de référence Pr est concaténé avec ladite base de données (3) en complète substitution du profil Pi de ladite base de données (3) dont l'identificateur Ei est identique à l'identificateur Er reçu lorsque ledit profil Pi existe.

10. Système selon l'une des revendications 1 à 9, dans lequel les codes dudit premier jeu (J1) sont exécutables par ledit terminal de recherche (TR) pour, au cours de l'étape 1a) précitée, recevoir depuis ledit terminal d'interrogation (TI) un identificateur de profil Ei et envoyer en réponse par l'intermédiaire dudit réseau de télécommunication (R) le profil Pi enregistré dans ladite base de données (3) identifié par ledit identificateur Ei, les codes d'instruction dudit deuxième jeu (J2) étant exécutables par ledit terminal d'interrogation (TI) pour, à l'étape 1a) précitée, utiliser ledit profil Pi reçu, éventuellement modifié ou complété par un utilisateur (U) dudit terminal d'interrogation (TI), comme profil de référence Pr d'une requête.

11. Système selon l'une des revendications 1 à 10, dans lequel ledit module logiciel d'interrogation (8) envoyé audit terminal d'interrogation (TI) comporte une liste de données optionnelles associables auxdits champs accessibles Cj, les codes d'instruction dudit deuxième jeu (J2) étant exécutables par ledit terminal d'interrogation (TI) pour permettre à un utilisateur (U) dudit terminal d'interrogation (TI) d'inclure lesdites données optionnelles dans ledit profil de référence Pr, en les associant auxdits champs accessibles Cj correspondants.

12. Système selon l'une des revendications 1 à 11, dans lequel, ledit terminal de recherche (TR) étant relié par l'intermédiaire dudit réseau de télécommunication (R) avec au moins un troisième terminal informatique, dit terminal partenaire (TP), les codes dudit premier jeu (J1) sont exécutables par ledit terminal de recherche (TR) pour recevoir depuis tout terminal partenaire (TP) une commande de mise en relation (15), ladite commande comprenant une adresse d'un terminal d'interrogation (TI), et pour exécuter ladite commande de mise en relation (15) en envoyant à destination dudit terminal d'interrogation (TI) ledit module logiciel d'interrogation (8).

13. Système selon la revendication 12, dans lequel le module logiciel d'interrogation (8) envoyé par ledit terminal de recherche (TR) en réponse à ladite commande de mise en relation (15) prédétermine lesdits champs accessibles Cj et/ou lesdits champs du domaine d'interrogation en fonction du terminal partenaire (TP) à l'origine de ladite commande de mise en relation (15), ledit domaine d'interrogation étant de préférence prédéterminé pour porter sur un produit ou service que ledit terminal partenaire (TP) est apte à fournir.

14. Système selon la revendication 11 prise en combinaison avec l'une des revendications 12 et 13, dans lequel lesdites données optionnelles, contenues dans le module logiciel d'interrogation (8) envoyé par ledit terminal de recherche (TR) en exécution d'une commande de mise en relation (15), comportent des données-partenaire Dpm liées au terminal partenaire (TP) à l'origine de ladite commande de mise en relation (15), lesdites données-partenaire Dpm étant issues d'une seconde base de données (19) mémorisée dans lesdits moyens de stockage (2) du terminal de recherche (TR), lesdites données-partenaire Dpm comportant de préférence des informations sur des produits et/ou services destinés à être fournis par ledit terminal partenaire (TP), par exemple des noms désignant lesdits produits et/ou services.

15. Système selon la revendication 14, dans lequel les codes dudit premier jeu (J1) sont exécutables par ledit terminal de recherche (TR) pour effectuer un filtrage desdites données de réponse Dqm en fonction desdites données-partenaire Dpm, le filtrage desdites données de réponse Dqm comportant les étapes consistant à
i/ comparer chaque donnée de réponse Dqm aux données-partenaire Dpm qui sont associées au même champ Cm que ladite donnée de réponse Dqm,
ii/ lorsque ladite donnée de réponse Dqm est sensiblement identique à une donnée-partenaire Dpm liée à un terminal partenaire (TP), inclure une adresse dudit terminal partenaire (TP) dans ladite réponse générée (12).

16. Système selon la revendication 15, dans lequel le filtrage desdites données de réponse comporte l'étape consistant à supprimer de ladite réponse générée (12) chaque donnée de réponse Dqm qui n'est sensiblement identique à aucune des données-partenaire Dpm liées à un terminal partenaire (TP) prédéterminé, ledit terminal partenaire (TP) prédéterminé étant de préférence le terminal partenaire (TP) à l'origine de ladite commande de mise en relation (15).

17. Système selon l'une des revendications 15 et 16, dans lequel le filtrage desdites données de réponse comporte l'étape consistant à exécuter un test logique pour chaque donnée de réponse Dqm, ledit test logique consistant à vérifier si une donnée complémentaire D'pm mémorisée dans ladite seconde base de données (19) remplit un critère prédéterminé, le résultat dudit test logique étant un nombre booléen, lesdites instructions du premier jeu (J1) étant exécutable par ledit terminal de recherche (TR) pour exclure de ladite réponse (12) ladite donnée de réponse Dqm si le résultat dudit test logique est faux, les instructions dudit deuxième jeu (J2) étant exécutables par ledit terminal d'interrogation (TI) pour permettre à un utilisateur (U) de prédéterminer ledit critère.

18. Système selon l'une des revendications 15 à 17, dans lequel les codes dudit premier jeu (J1) sont exécutables par ledit terminal de recherche (TR) pour rendre un terminal partenaire (TP), de préférence un terminal partenaire (TP) auquel est liée une donnée-partenaire Dpm sensiblement identique à la donnée de réponse Dqm dont la fréquence pondérée FPqm est maximale, destinataire de ladite réponse (12) et pour inclure une adresse dudit terminal d'interrogation (TI) dans ladite réponse (12) envoyée, afin que ledit terminal partenaire (TP) puisse entrer en communication avec ledit terminal d'interrogation (TI) après réception de ladite réponse (12).

19. Système selon l'une des revendications 1 à 18, dans lequel ledit terminal d'interrogation (TI) est un destinataire de ladite réponse (12).

20. Procédé d'assistance par ordinateur pour faire des offres commerciales, chaque offre commerciale comportant le nom d'un bien à fournir et l'adresse d'un fournisseur apte à fournir ledit bien, mettant en oeuvre le système selon l'une des revendications 1 à 11 afin d'obtenir une réponse (12), dite offre commerciale, envoyée au terminal d'interrogation (TI), les moyens de stockage (2) du terminal de recherche (TR) comportant une seconde base de données (19) pour mémoriser des données-fournisseur Dpm propres audit fournisseur, lesdites données-fournisseur Dpm comportant une liste de biens aptes à être fournis par ledit fournisseur, les codes dudit premier jeu (J1) étant exécutables par ledit terminal de recherche (TR) pour effectuer, après génération de ladite réponse (12), un filtrage desdites données de réponse Dqm en fonction desdites données-fournisseur Dpm, le filtrage desdites données de réponse Dqm comportant une étape consistant à comparer chaque donnée de réponse Dqm aux données-fournisseur Dpm qui sont associées au même champ Cm que ladite donnée de réponse Dqm, à supprimer de ladite réponse (12) toute donnée de réponse sensiblement différente de toutes les données-fournisseur Dpm et à inclure dans ladite réponse (12) une adresse dudit fournisseur lorsqu'une donnée de réponse Dqm est sensiblement identique à une donnée-fournisseur Dpm.

## Claims

1. Computer system consisting of a computer terminal, so-called search terminal (TR) comprising means, so-called search engine, adapted for extracting a list of data (12) from a database (3) in response to a request (9, 20, 24, 26), said database (3) having a matrix structure and comprising a plurality of rows Pi(i=1 to N) of recorded data Dij, said rows Pi being called profiles, and a plurality of columns Cj(j=1 to M) called fields, each field Cj defining a predetermined category of data Dij which are associated therewith, each profile Pi comprising an identifier Ei for identifying it uniquely and data each associated with a field Cj of said base, each profile Pi of the database comprising at least one data item Dij associated with at least one of said fields Cj, said search engine containing a first set (J1) of instruction codes which can be read or stored on a support and are executable by said search terminal (TR), said search terminal (TR) comprising storage means (2) for storing said database and being linked to a telecommunication network (R), so as to perform the successive operations comprising the steps consisting in:
1) sending, by way of said telecommunication network (R) and bound for a second computer terminal, the so-called interrogation terminal (TI), an interrogation software module (8) containing a second set (J2) of instruction codes which can be read or stored on a support and are executable by said interrogation terminal (TI) so as to:
1a) construct a reference profile Pr by associating reference data Drj with at least one field Cj among a collection of fields of said base, a so-called collection of accessible fields, the construction of said reference profile Pr being performed directly or indirectly by a user (U) of said interrogation terminal (TI);
1b) send to said search terminal (TR) a request comprising said reference profile Pr and designating an interrogation domain, said interrogation domain comprising at least one of the fields Cj of said database (3), each field Cm of said interrogation domain being preselected or having to be selected by a user (U) of said interrogation terminal (TI);
2) reading said request received by way of said telecommunication network (R);
3) extracting from said database (3) a sub-base (SB) of profiles Pk to be compared with said reference profile Pr, said sub-base (SB) comprising all or some of the profiles of said database (3);
4) calculating occurrence counters, a distinct occurrence counter Qn being calculated for each field Cn of a comparison domain (DC), said comparison domain (DC) consisting of all said database (3) fields Cj with which a data item Drj of said reference profile Pr is associated, the calculation of the occurrence counters Qn comprising the steps consisting successively in:
4a) selecting a field Cn of said comparison domain (DC),
4b) once for each profile Pk of said sub-base (SB), performing a test of correspondence between the reference profile Pr data item Drn associated with said field Cn, the so-called reference data item, and the data item Dkn of the profile Pk of the sub-base (SB) associated with said field Cn, the so-called data item to be compared, the result of said test of correspondence being a boolean number, the result of said test being true whenever said data item to be compared Dkn corresponds through a predetermined logic law with said reference data item Drn, the result of said test being in particular false when said data item to be compared is empty or non-existent,
4c) rendering said occurrence counter Qn equal to the number of said sub-base (SB) profiles Pk for which the result of said test of correspondence performed in step 4b) is true,
4d) repeating steps 4a) to 4c) by selecting another field Cn of the comparison domain (DC) which has not yet been selected in step 4a), if one exists;
5) calculating partial coefficients, a distinct partial coefficient αn being calculated for each field Cn of said comparison domain (DC) whose occurrence counter Qn calculated in step 4c) is nonzero, each partial coefficient αn being rendered equal to the value F(Qn) taken by a predetermined real weighting function F(x) of at least one variable x, when said variable x takes the value of said occurrence counter Qn;
6) calculating weighting coefficients CPk, a distinct weighting coefficient being calculated for each profile Pk of said sub-base (SB), each weighting coefficient CPk calculated being equal to a sum of distinct partial coefficients αn calculated in step 5), said sum pertaining to the partial coefficients αn of all those of the fields Cn of the comparison domain (DC) for which the result of the test of correspondence performed in step 4) between said reference profile Pr and the profile Pk to which said weighting coefficient CPk refers is true, and pertaining only to these fields;
7) calculating weighted frequencies FPqm, a weighted frequency FPqm being calculated for each data item Dim associated with a field Cm of the interrogation domain in said sub-base (SB) of profiles, the calculation of the weighted frequencies FPqm comprising the steps consisting, for each field Cm of the interrogation domain, in
7a) selecting a data item Dqm associated with said field Cm, said selected data item arising from a profile Pq among the collection of profiles Pk of said sub-base (SB) which comprise a nonempty data item Dkm associated with said field Cm,
7b) assigning said selected data item Dqm a weighted frequency FPqm equal to the sum of the weighting coefficients CPk of the profiles Pk of said collection of profiles whose data item Dkm associated with said field Cm is identical to said selected data item Dqm,
7c) repeating steps 7a) and 7b) by selecting another data item which has not yet been selected in step 7a), if one exists;
8) generating a response (12) to said request, said response comprising a list of data Dqm arising from said sub-base (SB), the so-called response data, said response data Dqm being those which possess the highest weighted frequencies FPqm among the data associated with the fields Cm of the interrogation domain, the maximum number NR of response data Dqm associated with each field Cm of the interrogation domain being predetermined and greater than or equal to one;
9) sending said response to a response recipient by way of the telecommunication network (R).

2. System as claimed in claim 1, wherein said response list is ordered in increasing or decreasing order of the weighted frequencies FPqm of the response data Dqm.

3. System as claimed in one of claims 1 and 2, wherein said weighting function F(x) of the aforesaid step 5) is a positive function of a single integer variable x, said weighting function preferably being decreasing, preferably equal to the inverse of said integer variable x.

4. System as claimed in one of claims 1 to 3, wherein said data item to be compared Dkn in the aforesaid step 4b) is in correspondence through said predetermined logic law with said reference data item Drn if it contains at least a substantial part of said reference data item Drn.

5. System as claimed in one of claims 1 to 4, wherein the codes of said first set (J1) are executable by said search terminal (TR) so as to, in the aforesaid step 8:
a/ calculate normalized coefficients (δqm) lying between 0 and 100%, a normalized coefficient δqm being calculated for each response data item Dqm, the calculation of each normalized coefficient δqm comprising a step consisting in dividing the weighted frequency FPqm of said response data item Dqm by the number NC of distinct fields Cn lying in said comparison domain (DC),
b/ include in said generated response (12) the normalized coefficient δqm of each response data item Dqm.

6. System as claimed in one of claims 1 to 5, wherein the codes of said first set (J1) are executable by said search terminal (TR) so as to filter said response data Dqm, in order to delete from said generated response (12) any response data item Dqm associated with a field Cm and substantially identical to a reference profile Pr data item Drm associated with the same field Cm.

7. System as claimed in one of claims 1 to 6, wherein the instruction codes of said second set (J2) are executable by said interrogation terminal (TI) so as to store said reference profile Pr and an identifier Er of said reference profile temporarily in a memory (5) of the interrogation terminal (TI), said identifier Er being supplied directly or indirectly by a user (U) of said interrogation terminal (TI); and to send said reference profile Pr and said identifier Er to said search terminal (TR).

8. System as claimed in claim 7, wherein the codes of said first set (J1) are executable by said search terminal (TR) so as to concatenate said reference profile Pr received with said database (3); the concatenation being performed in such a way that, on the one hand, if there exists a profile Pi of said database (3) whose identifier Ei is identical to the identifier Er of said reference profile Pr, the reference data Drj associated with the fields Cj for which there exists no associated data item Dij in the profile Pi are added to said profile Pi; on the other hand, if no profile Pi of said database (3) has an identifier Ei identical to the identifier Er of said reference profile Pr, said reference profile Pr being concatenated as new profile (P_{N+1}) of said database (3).

9. System as claimed in claim 8, wherein said reference profile Pr is concatenated with said database (3) in complete substitution of the profile Pi of said database (3) whose identifier Ei is identical to the identifier Er received when said profile Pi exists.

10. System as claimed in one of claims 1 to 9, wherein the codes of said first set (J1) are executable by said search terminal (TR) so as, in the course of the aforesaid step 1a) to receive from said interrogation terminal (TI) a profile identifier Ei and to send in response by way of said telecommunication network (R) the profile Pi which is recorded in said database (3) and is identified by said identifier Ei, the instruction codes of said second set (J2) being executable by said interrogation terminal (TI) so as, in the aforesaid step 1a), to use said profile Pi received, possibly modified or completed by a user (U) of said interrogation terminal (TI), as reference profile Pr of a request.

11. System as claimed in one of claims 1 to 10, wherein said interrogation software module (8) sent to said interrogation terminal (TI) comprises a list of optional data associable with said accessible fields Cj, the instruction codes of said second set (J2) being executable by said interrogation terminal (TI) so as to allow a user (U) of said interrogation terminal (TI) to include said optional data in said reference profile Pr, by associating them with said corresponding accessible fields Cj.

12. System as claimed in one of claims 1 to 11, wherein, said search terminal (TI) being linked by way of said telecommunication network (R) with at least a third computer terminal, the so-called partner terminal (TP), the codes of said first set (J1) are executable by said search terminal (TR) so as to receive from any partner terminal (TP) a contact command (15), said command comprising an address of an interrogation terminal (TI) and so as to execute said contact command (15) by sending said interrogation software module (8) to said interrogation terminal (TI).

13. System as claimed in claim 12, wherein the interrogation software module (8) sent by said search terminal (TR) in response to said contact command (15) predetermines said accessible fields Cj and/or said fields of the interrogation domain as a function of the partner terminal (TP) from which said contact command (15) originates, said interrogation domain preferably being predetermined so as to pertain to a product or service that said partner terminal (TP) is able to supply.

14. System as claimed in claim 11 taking in combination with one of claims 12 and 13, wherein said optional data, contained in the interrogation software module (8) sent by said search terminal (TR) in execution of a contact command (15), comprise partner-data Dpm connected with the partner terminal (TP) from which said contact command (15) originates, said partner-data Dpm arising from a second database (19) stored in said storage means (2) of the search terminal (TR), said partner-data Dpm preferably comprising information about products and/or services intended to be supplied by said partner terminal (TP), for example names designating said products and/or services.

15. System as claimed in claim 14, wherein the codes of said first set (J1) are executable by said search terminal (TR) so as to perform a filtering of said response data Dqm as a function of said partner-data Dpm, the filtering of said response data Dqm comprising the steps consisting
i/ in comparing each response data item Dqm with the partner-data Dpm which are associated with the same field Cm as said response data item Dqm,
ii/ when said response data item Dqm is substantially identical to a partner-data item Dpm connected with a partner terminal (TP), in including an address of said partner terminal (TP) in said generated response (12).

16. System as claimed in claim 15, wherein the filtering of said response data comprises the step consisting in deleting from said generated response (12) each response data item Dqm which is not substantially identical to any of the partner-data items Dpm connected with a predetermined partner terminal (TP), said predetermined partner terminal (TP) preferably being the partner terminal (TP) from which said contact command (15) originates.

17. System as claimed in one of claims 15 and 16, wherein the filtering of said response data comprises the step consisting in executing a logic test for each response data item Dqm, said logic test consisting in varying whether a complementary data item D'pm stored in said second database (19) fulfills a predetermined criterion, the result of said logic test being a boolean number, said instructions of the first set (J1) being executable by said search terminal (TR) so as to exclude said response data item Dqm from said response (12) if the result of said logic test is false, the instructions of said second set (J2) being executable by said interrogation terminal (TI) so as to allow a user (U) to predetermine said criterion.

18. System as claimed in one of claims 15 to 17, wherein the codes of said first set (J1) are executable by said search terminal (TR) so as to render a partner terminal (TP), preferably a partner terminal (TP) with which is connected a partner-data item Dpm substantially identical to the response data item Dqm whose weighted frequency FPqm is a maximum, recipient of said response (12) and so as to include an address of said interrogation terminal (TI) in said response (12) sent, so that said partner terminal (TP) can enter into communication with said interrogation terminal (TI) after receipt of said response (12).

19. System as claimed in one of claims 1 to 18, wherein said interrogation terminal (TI) is a recipient of said response (12).

20. Computer aided process for making commercial offers, each commercial offer comprising the name of a commodity to be supplied and the address of a supplier able to supply said commodity, implementing the system as claimed in one of claims 1 to 11 in order to obtain a response (12), so-called commercial offer, sent to the interrogation terminal (TI), the storage means (2) of the search terminal (TR) comprising a second database (19) for storing supplier-data Dpm specific to said supplier, said supplier-data Dpm comprising a list of commodities that can be supplied by said supplier, the codes of said first set (J1) being executable by said search terminal (TR) so as to perform, after generation of said response (12), a filtering of said response data Dqm as a function of said supplier-data Dpm, the filtering of said response data Dqm comprising a step consisting in comparing each response data item Dqm with the supplier-data Dpm which are associated with the same field Cm as said response data item Dqm, in deleting from said response (12) any response data item substantially different from all the supplier-data Dpm and in including an address of said supplier in said response (12) when a response data item Dqm is substantially identical to a supplier-data item Dpm.

## Patentansprüche

1. Computersystem, das von einem als Rechercheterminal (TR) bezeichneten Computerterminal gebildet wird, und als Suchmaschine bezeichnete Mittel umfasst, die dazu dienen, als Antwort auf eine Abfrage (9, 20, 24, 26) aus einer Datenbank (3) eine Datenliste (12) zu extrahieren, wobei die Datenbank (3) matrixartig aufgebaut ist und eine Vielzahl Zeilen Pi (i = 1 bis N) mit gespeicherten Daten Dij, wobei die Zeilen Pi als Profile bezeichnet werden, und eine Vielzahl als Felder bezeichnete Spalten Cj (j = 1 bis M) aufweist, wobei jedes Feld Cj eine vorgegebene Kategorie der mit ihm verknüpften Daten Dij definiert, wobei jedes Profil Pi einen Identifizierer Ei zu dessen eindeutiger Identifikation und Daten aufweist, die jeweils mit einem Feld Cj der Datenbank verknüpft sind, wobei jedes Profil Pi der Datenbank wenigstens ein Datum Dij aufweist, das mit wenigstens einem der Felder Cj verknüpft ist, wobei die Suchmaschine einen ersten Satz (J1) Instruktionscode enthält, der auf einem Träger les- oder speicherbar und von dem Rechercheterminal (TR) ausführbar ist, wobei das Rechercheterminal (TR) Speichermittel (2) zum Aspeichern der Datenbank aufweist und mit einem Telekommunikationsnetz (R) verbunden ist, um die aufeinanderfolgenden Operationen auszuführen, welche die folgenden Schritten aufweisen:
1) Absenden eines Abfrageprogrammmoduls (8) über das Telekommunikationsnetz (R) zu einem als Abfrageterminal (TI) bezeichneten zweiten Computerterminal, wobei das Abfrageprogrammmodul einen zweiten Satz (J2) Instruktionscode enthält, der auf einem Träger les- oder speicherbar und von dem Abfrageterminal (TI) ausführbar ist, um:
1a) ein Referenzprofil Pr zu bilden, indem Referenzdaten Drj mit wenigstens einem Feld Cj aus einer Gruppe von Feldern der Datenbank, die als Gruppe der zugänglichen Felder bezeichnet wird, verknüpft wird, wobei die Bildung des Referenzprofils Pr direkt oder indirekt vom Benutzer (U) des Abfrageterminals (TI) bewirkt wird;
1 b) Senden einer Abfrage zu dem Rechercheterminal (TR), welche das Referenzprofil Pr umfasst und einen Abfragebereich bezeichnet, wobei der Abfragebereich wenigstens eines der Felder Cj der Datenbank (3) aufweist, wobei jedes Feld Cm des Abfragebereichs vorgewählt oder durch einen Benutzer (U) des Abfrageterminals (TI) wählbar ist;
2) Lesen der über das Telekommunikationsnetz (R) empfangenden Abfrage;
3) Extrahieren einer Unterdatenbank (SB) von mit dem Referenzprofil Pr zu vergleichenden Profilen Pk aus der Datenbank (3), wobei die Unterdatenbank (SB) die Gesamtheit oder einen Teil der Profile der Datenbank (3) aufweist;
4) Berechnen von Häufigkeitszählern, wobei ein separater Häufigkeitszähler Qn für jedes Feld Cn eines Vergleichsbereichs (DC) berechnet wird, wobei der Vergleichsbereich (DC) aus allen Feldern Cj der Datenbank (3) gebildet wird, mit denen ein Datum Crj des Referenzprofils Pr verknüpft ist, wobei die Berechnung der Häufigkeitszähler Qn die folgenden aufeinanderfolgenden Schritte aufweist:
4a) Auswählen eines Feldes Cn des Vergleichsbereichs (DC),
4b) einmaliges Durchführen eines Entsprechungstests zwischen dem als Referenzdatum bezeichneten Datums Drn des dem Feld Cn zugeordneten Referenzprofils Pr und dem als Vergleichsdatum bezeichneten Datum Dkn des mit dem Feld Cn verknüpften Profils Pk der Unterdatenbank (SB), wobei das Ergebnis des Entsprechungstests eine boolsche Zahl ist, wobei das Ergebnis des Tests immer dann wahr ist, wenn das Vergleichsdatum Dkn gemäß einer vorgegebenen Logikregel mit dem Referenzdatum Drn übereinstimmt, und das Ergebnis des Tests insbesondere dann falsch ist, wenn das Vergleichsdatum leer ist oder nicht existiert,
4c) Gleichsetzen des Häufigkeitszählers Qn mit der Zahl der Profile Pk der Unterdatenbank (SB), für die das Ergebnis des Übereinstimmungstests des Schritts 4b) wahr ist,
4d) Wiederholen der Schritte 4a) bis 4c), wobei man ein anderes Feld Cn des Vergleichsbereichs (DC) auswählt, das im Schritt 4a) noch nicht ausgewählt wurde, sofern eines existiert;
5) Berechnen von Teilkoeffizienten, wobei ein separater Teilkoeffizient an für jedes Feld Cn des Vergleichsbereichs (CD) berechnet wird, bei dem der im Schritt 4c) berechnete Häufigkeitszähler von 0 verschieden ist, wobei jeder Teilkoeffizient an gleich dem Wert F(Qn) gesetzt wird, der von einer vorgegebenen reellen Gewichtungsfunktion F(x) wenigstens einer Variablen x gebildet wird, wenn die Variable x den Wert des Häufigkeitszählers Qn annnimmt;
6) Berechnen von Häufigkeitskoeffizienten CPk, wobei ein separater Häufigkeitskoeffizient für jedes Profil Pk der Unterdatenbank (SB) berechnet wird, wobei jeder Häufigkeitskoeffizient CPk gleich einer Summe der im Schritt 5) berechneten separaten Teilkoeffizienten αn ist, wobei die Summe diejenigen Teilkoeffizienten αn von all denjenigen Feldern Cn des Vergleichsbereichs (DC) berücksichtigt, bei denen das Ergebnis des im Schritt 4) durchgeführten Übereinstimmungstests zwischen dem Referenzprofil Pr und dem Profil Pk, auf welches sich der Gewichtungskoeffizient CPk bezieht, wahr ist und sich ausschließlich auf diese Felder erstreckt;
7) Berechnen von gewichteten Häufigkeiten FPqm, wobei eine gewichtete Häufigkeit FPqm für jedes mit einem Feld Cm des Abfragebereichs in der Unterdatenbank (SB) der Profile verknüpften Datum Dim berechnet wird, wobei die Berechnung der gewichteten Häufigkeiten FPqm für jedes Feld Cm des Abfragebereichs die Schritte umfasst:
7a) Auswählen eines mit dem Feld Cm verknüpften Datums Dqm, wobei das ausgewählte Datum von einem Profil Pq aus der Gruppe der Profile Pk der Unterdatenbank (SB) stammt, die ein nicht leeres, mit dem Feld Cm verknüpftes Datum Dkm enthalten,
7b) Zuordnen einer gewichteten Häufigkeit FPqm diesem ausgewählten Datum Dqm, welche gleich der Summe der Gewichtungskoeffizienten CPk des Profils Pk der Gruppe der Profile ist, bei denen das dem Feld Cm zugeordnete Datum Dkm identisch mit dem ausgewählten Datum Dqm ist,
7c) Wiederholen der Schritte 7a) und 7b), wobei ein anderes, im Schritt 7a) noch nicht ausgewählte Datum ausgewählt wird, sofern eines existiert;
8) Erzeugen einer Antwort (12) auf die Abfrage, wobei die Antwort eine aus der Unterdatenbank (SB) stammende Datenliste Dqm aufweist, die als Antwortdaten bezeichnet werden, wobei die Antwortdaten Dqm diejenigen sind, welche die höchsten gewichteten Häufigkeiten FPqm unter den mit den Felder Cm des Abfragebereichs verknüpften Daten besitzen, wobei die maximale Zahl MR der Antwortdaten Dqm, die mit jedem Feld Cm des Abfragebereichs verknüpft sind, vorgegeben und größer oder gleich Eins ist;
9) Senden der Antwort an einen Antwortempfänger über das Telekommunikationsnetz (R).

2. System gemäß Anspruch 1, bei welchem die Antwortliste in aufsteigender oder abfallender Ordnung der gewichteten Häufigkeiten FPqm der Antwortdaten Dqm angeordnet ist.

3. System gemäß einem der Ansprüche 1 und 2, bei welchem die Gewichtungsfunktion F(x) in dem oben genannten Schritt 5) eine positive Funktion einer einzigen ganzzahligen Variablen x ist, wobei die Gewichtungsfunktion vorzugsweise abnehmend ist, vorzugsweise gemäß dem Inversen der ganzzahligen Variablen x.

4. System gemäß einem der Ansprüche 1 bis 3, bei welchem das in dem oben genannten Schritt 4b) zu vergleichende Datum Dkn gemäß der vorgegebenen Logikregel mit dem Referenzdatum Drn übereinstimmt, wenn es wenigstens einen wesentlichen Anteil des Referenzdatums Drn enthält.

5. System gemäß einem der Ansprüche 1 bis 4, bei welchem der Code des ersten Satzes (J1) so von dem Rechercheterminal (TR) ausführbar ist, dass in dem oben genannten Schritt 8:
a/ normalisierte Koeffizienten (öqm) zwischen 0 und 100% berechnet werden, wobei für jedes Antwortdatum Dqm ein normalisierte Koeffizient δqm berechnet wird, wobei die Berechnung jedes normalisierten Koeffizienten δqm einen Schritt umfasst, der darin besteht, die gewichtete Häufigkeit FPqm des Antwortdatums Dqm durch die Anzahl NC der in dem Vergleichsbereich (DC) enthaltenen verschiedenen Felder Cn zu dividieren,
b/ die normalisierten Koeffizienten δqm jedes Antwortdatums Dqm in die erzeugte Antwort (12) einzufügen.

6. System gemäß einem der Ansprüche 1 bis 5, bei welchem der Code des ersten Satzes (J1) derart von dem ersten Rechercheterminal (TR) ausführbar ist, dass die Antwortdaten Dqm gefiltert werden, um in der erzeugten Antwort (12) diejenigen Antwortdaten Dqm zu unterdrücken, die mit einem Feld Cm verknüpft und im Wesentlichen identisch mit einem mit demselben Feld Cm verknüpften Datum Drm des Referenzprofils Pr sind.

7. System gemäß einem der Ansprüche 1 bis 6, bei welchem der Instruktionscode des zweiten Satzes (J2) von dem Abfrageterminal (TI) ausführbar ist, um in einem Speicher (5) des Abfrageterminals (TI) das Referenzprofil Pr und einen Identifizierer Er des Referenzprofils vorübergehend zu speichern, wobei der Identifizierer Er direkt oder indirekt von dem Benutzer (U) des Abfrageterminals (TI) bereitgestellt wird, und um das Referenzprofil Pr und den Indentifizierer Er zu dem Rechercheterminal (TR) zu senden.

8. System gemäß Anspruch 7, bei welchem der Code des ersten Satzes (J1) von dem Rechercheterminal (TR) ausführbar ist, um das empfangene Referenzprofil Pr mit der Datenbank (3) zu verknüpfen, wobei die Verknüpfung derart durchgeführt wird, dass einerseits, wenn ein Profil Pi der Datenbank (3) existiert, dessen Identifizierer Ei identisch mit dem Identifizierer Er des Referenzprofils Pr ist, die Referenzdaten Drj, die mit Feldern Cj verknüpft sind, für welche keine mit dem Profil Pi verknüpften Daten Dij existieren, zu dem Profil Pi hinzugefügt werden, und andererseits, wenn kein Profil Pi der Datenbank (3) einen mit dem Identifizierer Er des Referenzprofils Pr identischen Identifizierer Ei aufweist, das Referenzprofil Pr als neues Profil (Pₙ₊₁) der Datenbank (3) verknüpft wird.

9. System gemäß Anspruch 8, bei welchem das Referenzprofil Pr mit der Datenbank (3) als kompletter Ersatz des Profil Pi der Datenbank (3) verknüpft wird, dessen Identifizierer Ei identisch mit dem empfangenden Identifizierer Er ist, wenn das Profil Ei existiert.

10. System gemäß einem der Ansprüche 1 bis 9, bei welchem der Code des ersten Satzes (J1) von dem ersten Rechercheterminal (TR) ausführbar ist, um während des oben genannten Schritts 1a) von dem Abfrageterminal (TI) einen Profilidentifizierer Ei zu empfangen und als Antwort das in der Datenbank (3) gespeicherte und durch den Identifizierer Ei identifizierte Profil Pi über das Telekommunikationsnetz (R) auszusenden, wobei der Instruktionscode des zweiten Satzes (J2) von dem Abfrageterminal (TI) ausführbar ist, um in dem oben genannten Schritt 1a) das empfangene Profil Pi, gegebenenfalls von einem Benutzer (U) des Abfrageterminals (Ti) modifiziert oder vervollständigt, als Referenzprofil Pr einer Abfrage zu verwenden.

11. System gemäß einem der Ansprüche 1 bis 10, bei welchem das zu dem Abfrageterminal (TI) gesendete Abfrageprogrammmodul (8) eine Liste von Daten aufweist, die gegebenenfalls mit zugänglichen Feldern Cj verknüpfbar sind, wobei der Instruktionscode des zweiten Satzes (J2) von dem Abfrageterminal (TI) ausführbar ist, um es einem Benutzer (U) des Abfrageterminals (TI) zu ermöglichen, die optionalen Daten in das Referenzprofil Pr **dadurch** einzufügen, dass sie mit den entsprechenden zugänglichen Feldern Cj verknüpft werden.

12. System gemäß einem der Ansprüche 1 bis 11, bei welchem das Rechercheterminal (TR) über ein Telekommunikationsnetz (R) mit wenigstens drei, als Partnerterminals (TP) bezeichneten Computerterminals verbunden ist, wobei der Code des ersten Satzes (J1) von dem Rechercheterminal (TR) ausführbar ist, um von den Partnerterminals (TP) ein Verknüpfungskommando (15) zu empfangen, wobei das Kommando eine Adresse eines Abfrageterminals (TI) umfasst, und um das Verknüpfungskommando (15) **dadurch** auszuführen, dass das Abfrageprogrammmodul (8) zu dem Abfrageterminal (TI) gesendet wird.

13. System gemäß Anspruch 12, bei welchem das Abfrageprogrammmodul (8) von dem Rechercheterminal (TR) als Antwort auf das Verknüpfungskommando (15) die zugänglichen Felder Cj und/oder die Felder des Abfragebereichs abhängig von dem Partnerterminal (TP) am Ursprung des Verknüpfungskommandos (15) festlegt, wobei der Abfragebereich vorzugsweise so festgelegt wird, dass er sich auf ein Produkt oder eine Dienstleistung erstreckt, welche von dem Partnerterminal (TP) bereitgestellt werden kann.

14. System gemäß Anspruch 11 in Kombination mit einem der Ansprüche 12 oder 13, bei welchem die optionalen Daten, die in dem Abfrageprogrammmodul (8) enthalten sind, welches von dem Rechercheterminal (TR) bei der Ausführung eines Verknüpfungskommandos (15) ausgesendet wird, Partnerdaten Dpm aufweisen, die mit dem Partnerterminal (TP) am Ursprung des Verknüpfungskommandos (15) verbunden sind, wobei die Partnerdaten Dpm von einer zweiten, in den Speichermitteln (2) des Rechercheterminals (TR) gespeicherten Datenbank (19) stammen, wobei die Partnerdaten Dpm vorzugsweise Informationen über Produkte und/oder Dienstleistungen umfassen, die von dem Partnerterminal (TP) bereitgestellt werden können, beispielsweise Namen, welche die Produkte und/oder Dienstleistungen bezeichnen.

15. System gemäß Anspruch 14, bei welchem der Code des ersten Satzes (J1) von dem Rechercheterminal (TR) ausführbar ist, um eine Filterung der Antwortdaten Dqm in Abhängigkeit von den Partnerdaten Dpm durchzuführen, wobei die Filterung der Antwortdaten Dqm die Schritte aufweist, bestehend aus
i/ Vergleichen jedes Antwortdatums Dqm mit Partnerdaten Dpm, welche mit dem gleichen Feld Cm wie das Antwortdatum Dqm verknüpft sind,
ii/ Einfügen einer Adresse des Partnerterminals (TP) in die erzeugte Antwort (12), wenn das Antwortdatum Dqm im Wesentlichen identisch mit einem, mit einem Partnerterminal (TP) verbundenen Partnerdatum Dpm ist.

16. System gemäß Anspruch 15, bei welchem die Filterung der Antwortdaten den Schritt umfasst, der darin besteht, in der erzeugten Antwort (12) jedes Antwortdatum Dqm zu unterdrücken, das mit überhaupt keinem der mit einem vorgegebenen Partnerterminal (TP) verbundenen Partnerdaten Dpm im Wesentlichen identisch ist, wobei das vorgegebene Partnerterminal (TP) vorzugsweise das Partnerterminal (TP) am Ursprung des Verknüpfungskommandos (15) ist.

17. System gemäß einem der Ansprüche 15 und 16, bei welchem die Filterung der Antwortdaten den Schritt aufweist, welcher darin besteht, einen Logiktest für jedes Antwortdatum Dqm durchzuführen, wobei der Logiktest darin besteht, zu verifizieren, ob ein in der zweiten Datenbank (19) gespeichertes komplementäres Datum D'pm ein vorgegebenes Kriterium erfüllt, wobei das Ergebnis des Logiktests eine boolsche Zahl ist, wobei die Instruktionen des ersten Satzes (J1) von dem ersten Rechercheterminal (TR) ausführbar sind, um von der Antwort (12) das Antwortdatum Dqm auszuschließen, wenn das Ergebnis des Logiktests falsch ist, wobei die Instruktionen des zweiten Satzes (J2) von dem ersten Abfrageterminal (TI) ausführbar sind, um einem Benutzer (U) die Festlegung des Kriteriums zu ermöglichen.

18. System gemäß einem der Ansprüche 15 bis 17, wobei der Code des ersten Satzes (J1) von dem ersten Rechercheterminal (TR) ausführbar ist, um ein Partnerterminal (TP), vorzugsweise ein Partnerterminal (TP), mit welchem ein mit dem Antwortdatum Dqm, dessen gewichtete Häufigkeit FPqm maximal ist, identisches Partnerdatum Dpm verbunden ist, als Empfänger der Antwort (12) festzulegen und eine Adresse des Abfrageterminals (TI) in die ausgesandte Antwort (12) einzufügen, damit das Partnerterminal (TP) nach Empfang der Antwort (12) mit dem Abfrageterminal (TI) kommunizieren kann.

19. System gemäß einem der Ansprüche 1 bis 18, bei welchem das Abfrageterminal (TI) ein Empfänger der Antwort (12) ist.

20. Computergestütztes Verfahren zur Erstellung von kommerzielle Angebote, wobei jedes kommerzielle Angebot den Namen eines zu liefernden Gutes und die Adresse eines Lieferanten, der das Gut liefern kann aufweist, wobei das System gemäß einem der Ansprüche 1 bis 11 eingesetzt wird, um eine als kommerzielles Angebot bezeichnete Antwort (12) zu erhalten, die zu dem Abfrageterminal (TI) gesendet wird, wobei die Speichermittel (2) des Rechercheterminals (TR) eine zweite Datenbank (19) aufweisen, um lieferantenspezifische Lieferantendaten Dpm zu speichern, wobei die Lieferantendaten Dpm eine Liste der von dem Lieferanten lieferbaren Güter aufweisen, wobei der Code des ersten Satzes (J1) von dem ersten Rechercheterminal (TR) ausführbar ist, um nach Erzeugung der Antwort (12) eine Filterung der Antwortdaten Dqm in Abhängigkeit von den Lieferantendaten Dpm durchzuführen, wobei die Filterung der Antwortdaten Dqm einen Schritt aufweist, der darin besteht, jedes Antwortdatum Dqm mit den Lieferantendaten Dpm zu vergleichen, die mit dem gleichen Feld Cm wie das Antwortdatum Dqm verknüpft sind, in der Antwort (12) alle Daten zu unterdrücken, die im Wesentlichen unterschiedlich von den Lieferantendaten Dpm sind und in der Antwort (12) eine Adresse des Lieferanten einzufügen, wenn ein Antwortdatum Dqm im Wesentlichen identisch mit einem Lieferantendatum Dpm ist.
